# EUROPÄISCHE PATENTSCHRIFT

(11) **EP 2 263 467 B1**
(45) Veröffentlichungstag und Bekanntmachung des Hinweises auf die Patenterteilung: **15.11.2017**
(21) Anmeldenummer: 10005197.8
(22) Anmeldetag: 18.05.2010
(51) Int. Cl.: A21D 6/00, B08B 17/00, B01F 3/12, B01F 7/20, B01F 5/22, B01F 7/00, B29C 49/20

(54) **Vorrichtung zum Befeuchten von rieselfähigem Gut, insbesondere Mehl**
Device for humidifying free flowing goods, in particular flour
Dispositif de mouillage destiné au mouillage de produits pouvant s'écouler, notamment de la farine

(30) Priorität: 19.06.2009 DE 102009029935
(43) Veröffentlichungstag der Anmeldung: 22.12.2010
(73) Patentinhaber: Zeppelin Systems GmbH, 88045 Friedrichshafen (DE)
(72) Erfinder: Lehnen, Hans-Dieter, 64859 Eppertshausen (DE); Friedrich, Harald, 65451 Kelsterbach (DE); Rumpf, Wolfhard, 63322 Rödermark (DE); Gliesing, Harry, 64846 Gross-Zimmern (DE); Pflug , Christian, D-61273 Wehrheim (DE); Nowatzki, Rolf, D-64354 Reinheim (DE); Breitwieser, Heinz, D-64839 Münster (DE); Will, Wolfgang, D-65207 Wiesbaden (DE); Basta, Irene, D-63128 (DE)
(74) Vertreter: Knoblauch, Andreas

(56) Entgegenhaltungen:
- DD-A1- 229 612
- DE-A1- 2 836 548
- US-A- 4 341 349

## Beschreibung

Die Erfindung betrifft eine Befeuchtungsvorrichtung zum Befeuchten von rieselfähigem Gut, insbesondere Mehl, mit einem Rotor, der eine Rotationsachse aufweist und zumindest teilweise von einer Umhüllung umgeben ist, mit einer Rieselgutzufuhr in die Umhüllung und einer Flüssigkeitsausgabe, die Flüssigkeit vom Rotor aus radial nach außen ausgibt, wobei der Rotor mehrere vom Umfang des Rotors abstehende Flächen aufweist, die mit einer Umfangsrichtung des Rotors einen spitzen Winkel einschließen, von denen jede an einem Flächenträger angeordnet ist, wobei zwischen benachbarten Flächenträgern jeweils eine Lücke vorgesehen ist, die zur Flüssigkeitsausgabe hin eine Verengung aufweist, wobei die Verengung durch eine Fläche und ein Ende eines benachbarten Flächenträgers gebildet ist, und jeder Flächenträger mit seinem Ende über einen Wandabschnitt verbunden ist.

Die Erfindung wird im Folgenden anhand von Mehl als Beispiel für ein rieselfähiges Gut beschrieben. Sie ist jedoch nicht darauf beschränkt.

Mehl wird in Vorratsbehältern aufbewahrt, um es dann zur weiteren Verarbeitung beispielsweise in einen Misch- oder Knetbehälter umzuleiten. Bei der Umleitung vom einen zum anderen Behälter, aber auch bei der manuellen Bearbeitung ganz allgemein, besteht das Risiko der Staubbildung. Für den Bäcker kann eine Staubbildung aber ein erhebliches gesundheitliches Risiko beinhalten. Ist das Atemsystem des Bäckers langfristig einer Staubbelastung ausgesetzt, so können schwerwiegende Allergien die Folge sein. So ist bei Bäckern, die ständig Mehlstaub ausgesetzt sind, das Risiko des sogenannten "Bäcker-Asthmas" hoch. Im schlimmsten Fall kann eine Berufsunfähigkeit die Folge sein, was zu hohen volkswirtschaftlichen Schäden führt.

Aus diesem Grund gab es verschiedene Bemühungen, beispielsweise mit Filtern, Tüchern oder Abdeckungen die Staubbildung zu verringern. Damit geht aber nur eine teilweise Reduzierung der Staubbildung einher.

Aus DD 229 612 A1 ist eine Vorrichtung zur kontinuierlichen gleichmäßigen Befeuchtung sowie kontinuierlichen Bestimmung und Korrektur der Feuchte von rieselfähigem Gut bekannt. Die Vorrichtung weist eine Welle auf, an der ein mit einer Spitze nach oben weisender Kegel mit Schikanen angeordnet ist. In Fallrichtung folgt auf den Kegel ein Fliehkraftzerstäuber und ein zylinderförmiger Körper mit Schikanen. Am Ausgang des Fallschachts ist ein Feuchtesensor angebracht, mit dem die dem Gut beigefügte Feuchte gemessen wird. Mit Hilfe eines Signals des Feuchtesensors wird die dem Fliehkraftzerstäuber zugefügte Flüssigkeitsmenge bestimmt.

Mit einer solchen Vorrichtung versucht man das Risiko der Staubbildung zu verringern. Tatsächlich weist eine solche Vorrichtung aber einige Nachteile auf. Insbesondere ist das Risiko einer Verstopfung sehr groß. Die am Rotor abstehenden Flächen erfassen das Gut und bewegen es, während der Rotor die Fläche mitdreht, parallel zur Rotationsachse. Um das Gut zu erfassen, muss die Fläche einen von Null verschiedenen Winkel, insbesondere einen spitzen Winkel, mit der Umfangsrichtung des Rotors einschließen. Das Gut wird von der Fläche auch verwirbelt. Durch das Verwirbeln wird das Gut fein verteilt und ist damit ideal präpariert, um im nächsten Schritt gleichmäßig befeuchtet zu werden. Mit mehreren Flächen kann das Gut am gesamten Umfang des Rotors gleichmäßig gefördert werden. Als Flächenträger kann man beispielsweise eine dünne Platte verwenden. So spart man Gewicht, und die Fliehkräfte innerhalb der Vorrichtung sind gering. Dabei ist es denkbar, dass es einen ersten Flächenträger gibt und einen weiteren und beide einen unterschiedlichen Winkel mit der Förderrichtung einschließen. Das Gut wird durch die Lücke zwischen den Flächenträgern in Richtung der Flüssigkeitsausgabe gefördert. Durch die an der Lücke angeordnete Verengung wird das Luft-Gutstaub-Gemisch in der Verengung verdichtet und fein durchmischt. Dabei wird das Luft-Gutstaub-Gemisch auch zusätzlich in Förderrichtung beschleunigt. Nach dem Durchtritt durch die Verengung expandiert das Staub-Luft-Gemisch, so dass sich die Staub-Partikel voneinander trennen und sich fein und gleichmäßig verteilen. Dies ermöglicht es bei der nachfolgenden Befeuchtung, dass die Flüssigkeit mit hoher Wahrscheinlichkeit alle Partikel beaufschlagen kann. Vorzugsweise schließt sich an die Verengung ein Expansionsraum an. Im Expansionsraum, der sich an die Verengung anschließt, nimmt die Dichte des Luft-Gutstaub-Gemisches wieder ab, wobei der Druckabfall sehr schnell erfolgen kann. Das Luftvolumen, das das rieselfähige Gut enthält, expandiert und setzt die Dichte des Staubs aus dem Gut herab. Dabei kommt es zu einer weiteren homogenen Verteilung des Gutstaubes in der Luft und die Beschleunigung in Förderrichtung nimmt wieder ab. Die Benetzung des Guts wird verbessert. Erfindungsgemäß ist die Verengung durch eine Fläche und ein Ende eines benachbarten Flächenträgers gebildet. Dies ist eine besonders vorteilhafte Ausgestaltung, mit der man neben der Verengung auch gleichzeitig den Expansionsraum erhält. Wählt man als Flächenträger eine Platte, so hat die Anordnung, mit der eine Verengung und ein Expansionsraum erzielt wird, ein relativ geringes Gewicht. Erfindungsgemäß ist jeder Flächenträger mit seinem Ende über einen Wandabschnitt verbunden. Durch den Wandabschnitt führt man das Rieselgut der Verengung zu und verhindert so, dass es die Verengung nicht passiert. Darüber hinaus kann man durch die Wandabschnitte eine Barriere bilden, die verhindert, dass befeuchtetes Gut wieder am Rotor hochsteigt. Die Feuchtigkeit wird von der Zwangsfördereinrichtung fern gehalten.

Der Erfindung liegt die Aufgabe zugrunde, eine funktionsfähige Vorrichtung zum Befeuchten von rieselfähigem Gut bereitzustellen.

Diese Aufgabe wird bei einer Befeuchtungsvorrichtung der eingangs genannten Art dadurch gelöst, dass die Flächen und das jeweils benachbarte Ende eines benachbarten Flächenträgers und/oder der benachbarte Wandabschnitt eines benachbarten Flächenträgers in Umfangsrichtung einander überlappen.

Durch das Überlappen stellt man sicher, dass das befeuchtete Gut nicht in der Lücke wieder hochsteigt und in die Zwangsfördereinrichtung gerät.

Vorzugsweise bilden die Flächen eine Zwangsfördereinrichtung, die das rieselfähige Gut an der Flüssigkeitsausgabe vorbei in eine Richtung parallel zur Rotationsachse fördert. Durch die Zwangsfördereinrichtung wird das rieselfähige Gut nicht mehr nur mit Hilfe der Schwerkraft, sondern durch eine zusätzliche Förderleistung zwangsweise an der Flüssigkeitsausgabe vorbeigeführt. Durch die Zwangsfördereinrichtung schließt man die Möglichkeit eines Gutstaus praktisch aus. Meistens wird man dabei als Förderrichtung die Fallrichtung wählen, um zusätzlich noch von der Schwerkraft zu profi-tieren. Es ist aber auch denkbar, dass, wenn es beispielsweise für den restlichen Aufbau von Vorteil ist, die Förderrichtung und die Fallrichtung einen Winkel einschließen. Man wird dabei die mit dem Gut in Kontakt stehenden Oberflächen der Vorrichtung aus einem feuchtigkeitsundurchlässigen, gleitfähigen und festen Material herstellen, wie beispielsweise einer metallischen Legierung. Die Umhüllung kann man beispielsweise als Rohr ausgestalten. Die Förderung muss nicht ausschließlich parallel zur Rotationsachse im mathematischen Sinne erfolgen. Abweichungen davon sind möglich und können sogar erwünscht sein, solange die Hauptförderrichtung etwa parallel zur Rotationsachse erfolgt.

Vorzugsweise weist die Flüssigkeitsausgabe eine Schlitzdüse auf. Durch eine Schlitzdüse kann die Flüssigkeit vom Rotor aus ohne großen Aufwand nach außen abgegeben werden. Denkbar ist ein zur Rotationsachse senkrechter Schlitz, der die Flüssigkeit radial gleichmäßig verteilt. Da sich der Rotor dreht, entsteht ein feiner Nebel, durch den das Gut geleitet werden kann. Als Flüssigkeit kann beispielsweise Wasser gewählt werden, da Wasser gut bindet, überall zur Verfügung steht und gesundheitlich unbedenklich ist. Durch die Schlitzdüse kann zwar Flüssigkeit austreten. Das Risiko, dass in umgekehrter Richtung Gut in die Schlitzdüse und damit in die Flüssigkeitszufuhr eindringt, ist relativ gering.

Vorzugsweise ist die Schlitzdüse zwischen zwei Rotorteilen ausgebildet, deren Abstand parallel zur Rotationsachse einstellbar ist. Wenn man den Schlitz zwischen zwei Rotorteilen ausbildet, dann kann man die Höhe des Schlitzes dadurch wählen, dass man den Abstand zwischen den Rotorteilen ändert. Mit der Höhe regelt man den Druck und die Geschwindigkeit der austretenden Flüssigkeit. Dies kann man je nach befeuchteter Gutmenge, aber auch nach gewünschtem Grad der Befeuchtung einstellen.

Vorzugsweise ist zwischen einem radial äußeren Ende der Fläche und der Umhüllung ein radialer Abstand vorgesehen, der maximal 5 %, insbesondere maximal 2 % eines Innendurchmessers der Umhüllung entspricht. Wählt man den radialen Abstand sehr gering, also etwa zwischen 0,1 % bis 5 % des Innendurchmessers, so wird ein Großteil des Gutes von der Fläche erfasst und gefördert. Auf diese Weise sichert man aber auch, dass die Fläche als Flüssigkeitsscheideeinrichtung wirkt. Es ist für die Flüssigkeit nahezu unmöglich, auf die der Flüssigkeitsabgabeeinrichtung abgewandte Seite der Fläche zu gelangen.

Vorzugsweise weist der Rotor auf der der Zwangsförder-einrichtung abgewandten Seite der Flüssigkeitsausgabe mindestens einen Scherstab auf. Ein Scherstab verteilt das befeuchtete Gut gleichmäßig. Durch den Scherstab wird garantiert, dass das Gut nicht nur befeuchtet, sondern auch verteilt wird. Den Scherstab kann man beispielsweise als rechteckige metallische Platte ausbilden.

Vorzugsweise sind in Axialrichtung verteilt mehrere Scherstäbe vorgesehen, die in Umfangsrichtung relativ zueinander versetzt sind. Bringt man mehrere Scherstäbe in Axialrichtung versetzt an, so erhält man eine noch gleichmäßigere Verteilung des Gutes.

Vorzugsweise weist die Rieselgutzufuhr eine Transportvorrichtung, insbesondere eine Schlägerblechanordnung oder eine Transportschnecke, auf. Mit Hilfe einer Transportvorrichtung lässt sich das Rieselgut gezielt und in der gewünschten Menge unabhängig von der Schwerkraft in Richtung der Zwangsfördereinrichtung führen. Eine Transportschnecke stellt dabei eine einfache und effiziente Transporteinrichtung dar.

Die Erfindung wird im Folgenden anhand eines bevorzugten Ausführungsbeispiels in Verbindung mit der Zeichnung beschrieben. Hierin zeigen:
- Fig. 1: eine perspektivische Gesamtansicht einer Befeuchtungsvorrichtung,
- Fig. 2: einen Schnitt durch eine Befeuchtungsvorrichtung,
- Fig. 3: eine Detailansicht eines Schnitts durch eine Befeuchtungsvorrichtung mit einer Flüssigkeitsausgabe und einem Scherstab und
- Fig. 4: eine perspektivische Teilansicht der Befeuchtungsvorrichtung mit einer Zwangsfördereinrichtung und Scherstäben.

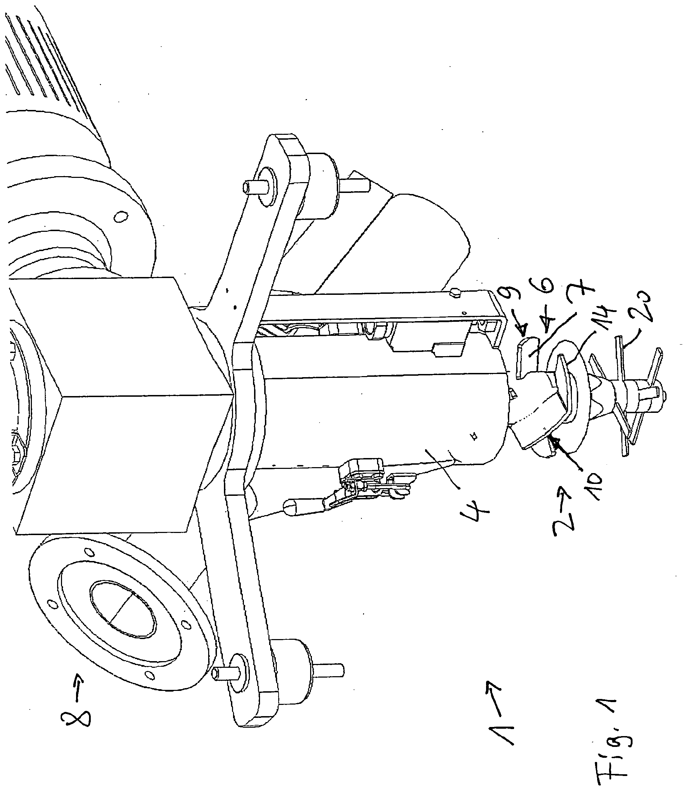

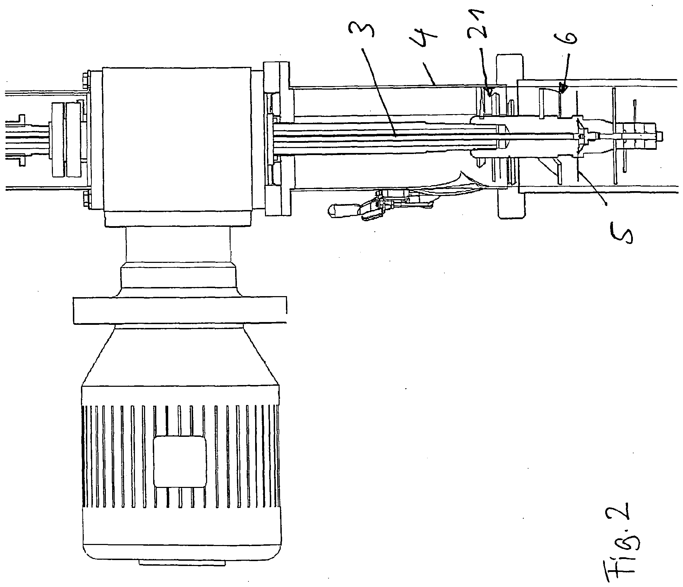

Wie in Fig. 1 und 2 zu erkennen ist, weist eine Befeuchtungsvorrichtung 1 einen Rotor 2 mit einer Rotationsachse 3 auf. Der Rotor 2 kann dabei ganz oder teilweise von einer Umhüllung 4 umgeben sein. Idealer-weise will man zumindest den Teil der Vorrichtung staubdicht ausstatten, in dem das Gut noch nicht befeuchtet ist. Dies kann beispielsweise durch die Umhüllung 4 geschehen. Das Rieselgut kann aus einem Vorratsbehälter, der hier nicht dargestellt ist, über eine Rieselgutzufuhr 8 zum Rotor 2 gelangen.

Um das Rieselgut zum Rotor 2 zu leiten, kann man beispielsweise eine Transportvorrichtung 21 verwenden, die als Schnecke oder als Schlägerblechanordnung ausgestattet sein kann. Der Rotor 2 kann dabei mehrere vom Umfang des Rotors 2 abstehende Flächen 7 aufweisen, die jeweils mit einer Umfangsrichtung des Rotors einen spitzen Winkel einschließen und eine Zwangsfördereinrichtung 6 bilden. Durch diese rotierenden Flächen 7 wird das Rieselgut zwangsweise zur Flüssigkeitsausgabe 5 geführt. Die Flächen 7 sind um den Rotor in Umfangs-richtung verteilt und jede ist an einem Flächenträger 9 angeordnet. Ein Flächenträger 9 kann beispielsweise eine flache Platte sein. Zwischen benachbarten Flächen-trägern 9 ist dabei jeweils eine Lücke 10 vorgesehen, durch die das Rieselgut zwangsweise zur Flüssigkeitsausgabe 5 geführt wird.

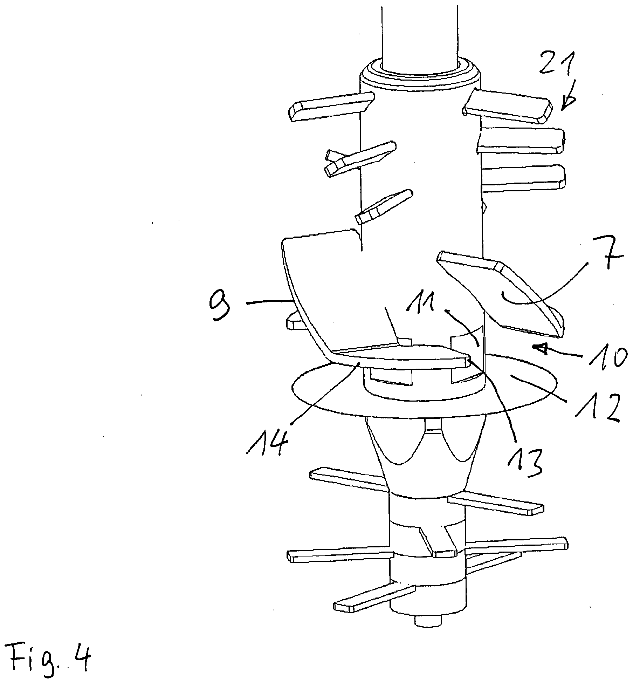

Diese Lücke 10 kann dabei eine Verengung 11 aufweisen, wie in Fig. 4 zu erkennen ist. An die Verengung schließt sich dann direkt ein Expansionsraum 12 an. In der Verengung 11 wird das Luft-Rieselgut-Gemisch verdichtet und dabei beschleunigt. Im Expansionsraum 12 nimmt die Dichte und die Beschleunigung wieder ab. Dabei expandiert das Luft-Rieselgut-Gemisch, es wird fein durchmischt und ist äußerst homogen. Die Verengung 11 kann durch die Fläche 7 und ein Ende 13 eines benachbarten Flächenträgers 9 gebildet sein. Auf diese Weise bildet man neben der Verengung 11 auf der der Flüssigkeitsausgabeseite zugewandten Seite des Flächenträgers den Expansionsraum 12. Der Flächenträger 9 weist zwischen der Fläche 7 und dem Ende 13 einen Wandabschnitt 14 auf, der etwa in Umfangsrichtung verläuft. Der Wandabschnitt 14 verhindert, dass befeuchtetes Gut am Rotor 2 entgegen der Zwangsförderrichtung hoch steigt. Um zu verhindern, dass das befeuchtete Gut durch die Lücke wieder hochsteigt, kann man die Flächen und das jeweils benachbarte Ende und/oder den benachbarten Wandabschnitt überlappen lassen.

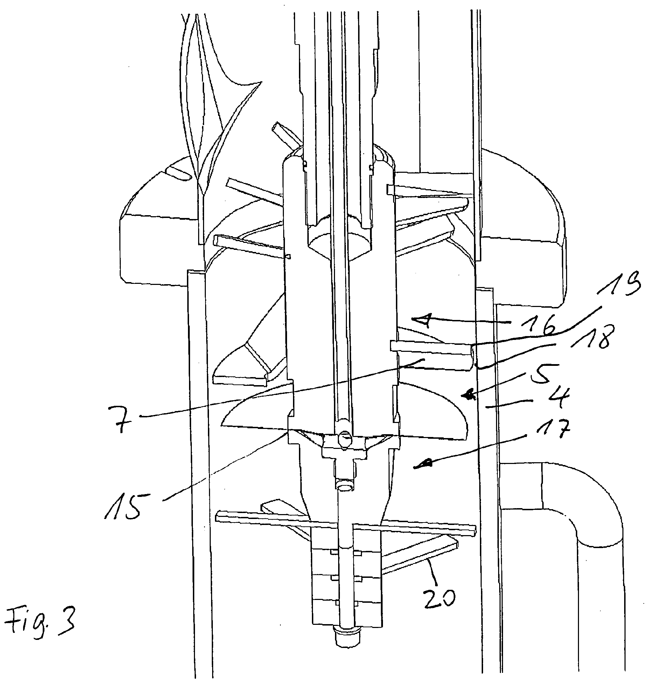

Die Zwangsfördereinrichtung 6 führt das Rieselgut einer Flüssigkeitsausgabe 5 zu. Dies kann man im Schnitt in Fig. 3 sehen. Die Flüssigkeitsausgabe 5 weist eine Schlitzdüse 15 auf. Die Schlitzdüse 15 kann dabei durch ein Rohr, das parallel zur Rotationsachse verläuft, mit Flüssigkeit versorgt werden (siehe Fig. 2). Die Flüssigkeitsversorgung kann beispielsweise an eine hier nicht dargestellte Trinkwasserversorgung angeschlossen sein. Wie in Fig. 3 dargestellt, ist die Schlitzdüse 15 zwischen zwei Rotorteilen 16 und 17 angeordnet. Indem man den Abstand zwischen den Rotorteilen 16 und 17 regelt, regelt man die Höhe der Schlitzdüse 15 und damit die Flüssigkeitsabgabe, wenn sich der Rotor 2 dreht.

Wenn man einen radialen Abstand 18 zwischen einem radial äußeren Ende 19 der Fläche 7 und der Umhüllung 4 so wählt, dass er maximal 5 %, insbesondere maximal 2 % eines Innendurchmessers der Umhüllung 4 entspricht, dann stellt man sicher, dass die Flächen 7 das Rieselgut nahezu vollständig erfassen. Sind um den gesamten Umfang des Rotors 2 Flächen 7 vorgesehen, die einen solchen Abstand haben, dann erfasst man das Rieselgut vollständig. Zudem verhindert man, dass Flüssigkeit in einen Bereich der Befeuchtungsvorrichtung vordringt, in dem man keine Flüssigkeit möchte, beispielsweise aus hygienischen Gründen.

Nach Verlassen des Bereichs, in dem die Flüssigkeitsausgabe angeordnet ist, gelangt das Rieselgut in einen Bereich, in dem ein Scherstab 20 angeordnet ist (siehe Fig. 3 und 4). Diese verteilen das befeuchtete Rieselgut zu einer homogenen Masse. Es ist auch denkbar, dass mehrere Scherstäbe 20 angeordnet sind, wodurch das befeuchtete Rieselgut noch besser zu einer homogenen Masse verteilt wird. Das so befeuchtete Rieselgut bildet keinen Feinstaub mehr.

Will man es nicht sofort weiterbearbeiten, so kann man es nach dem Befeuchten in einem Ofen wieder komplett trocknen. Das so getrocknete Rieselgut weist zumindest über einen langen Zeitraum keinen Feinstaub auf.

## Patentansprüche

1. Befeuchtungsvorrichtung (1) zum Befeuchten von rieselfähigem Gut, insbesondere Mehl, mit einem Rotor (2), der eine Rotationsachse (3) aufweist und zumindest teilweise von einer Umhüllung (4) umgeben ist, mit einer Rieselgutzufuhr in die Umhüllung und einer Flüssigkeitsausgabe (5), die Flüssigkeit vom Rotor aus radial nach außen ausgibt, wobei der Rotor mehrere vom Umfang des Rotors (2) abstehende Flächen (7) aufweist, die mit einer Umfangsrichtung des Rotors einen spitzen Winkel einschließen, von denen jede an einem Flächenträger (9) angeordnet ist, wobei zwischen benachbarten Flächenträgern (9) jeweils eine Lücke (10) vorgesehen ist, die zur Flüssigkeitsausgabe (5) hin eine Verengung (11) aufweist, wobei die Verengung (11) durch eine Fläche (7) und ein Ende (13) eines benachbarten Flächenträgers (9) gebildet ist, und jeder Flächenträger (9) mit seinem Ende (13) über einen Wandabschnitt (14) verbunden ist, **dadurch gekennzeichnet, dass** die Flächen (7) und das jeweils benachbarte Ende (13) eines benachbarten Flächenträgers (9) und/oder der benachbarte Wandabschnitt (14) eines benachbarten Flächenträgers (9) in Umfangsrichtung einander überlappen.

2. Befeuchtungsvorrichtung nach Anspruch 1, **dadurch gekennzeichnet, dass** sich an die Verengung ein Expansionsraum (12) anschließt.

3. Befeuchtungsvorrichtung nach einem der Ansprüche 1 oder 2, **dadurch gekennzeichnet, dass** die Flächen (7) eine Zwangsfördereinrichtung (6) bilden, die das rieselfähige Gut an der Flüssigkeitsausgabe (5) vorbei in eine Richtung parallel zur Rotationsachse (3) fördert.

4. Befeuchtungsvorrichtung nach einem der Ansprüche 1 bis 3, **dadurch gekennzeichnet, dass** die Flüssigkeitsausgabe (5) eine Schlitzdüse (15) aufweist.

5. Befeuchtungsvorrichtung nach Anspruch 4, **dadurch gekennzeichnet, dass** die Schlitzdüse zwischen zwei Rotorteilen (16) und (17) ausgebildet ist, deren Abstand parallel zur Rotationsachse (3) einstellbar ist.

6. Befeuchtungsvorrichtung nach einem der Ansprüche 1 bis 5, **dadurch gekennzeichnet, dass** zwischen einem radial äußeren Ende (19) der Fläche (7) und der Umhüllung (4) ein radialer Abstand (18) vorgesehen ist, der maximal 5 %, insbesondere maximal 2 % eines Innendurchmessers der Umhüllung entspricht.

7. Befeuchtungsvorrichtung nach einem der Ansprüche 1 bis 6, **dadurch gekennzeichnet, dass** der Rotor (2) auf der der Zwangsfördereinrichtung (6) abgewandten Seite der Flüssigkeitsausgabe (5) mindestens einen Scherstab (20) aufweist.

8. Befeuchtungsvorrichtung nach Anspruch 7, **dadurch gekennzeichnet, dass** in Axialrichtung verteilt mehrere Scherstäbe (20) vorgesehen sind, die in Umfangsrichtung relativ zueinander versetzt sind.

9. Befeuchtungsvorrichtung nach Anspruch 1 bis 8, **dadurch gekennzeichnet, dass** die Rieselgutzufuhr (8) eine Transportvorrichtung (21), insbesondere eine Schlägerblechanordnung oder eine Transportschnecke, aufweist.

## Claims

1. Humidifying device (1) for humidifying free-flowing goods, in particular flour, comprising a rotor (2) that has a rotary shaft (3) and is enclosed by a casing (4) at least in part, and comprising a feed for free-flowing goods and a liquid output (5) that outputs liquid radially towards the outside from the rotor, the rotor comprising a plurality of surfaces (7) that protrude from the periphery of the rotor (2) and form an acute angle with a peripheral direction of the rotor and each of which is arranged on a surface support (9), a gap (10) being provided between adjacent surface supports (9) in each case, which gap comprises a narrowing (11) towards the liquid output (5), the narrowing (11) being formed by a surface (7) and an end (13) of an adjacent surface support (9), and each surface support (9) being connected to the end (13) thereof by a wall portion (14), **characterised in that** the surfaces (7) and the relevant adjacent end (13) of an adjacent surface support (9) and/or the adjacent wall portion (14) of an adjacent surface support (9) overlap one another in the peripheral direction.

2. Humidifying device according to claim 1, **characterised in that** an expansion chamber (12) is connected to the narrowing.

3. Humidifying device according to either claim 1 or claim 2, **characterised in that** the surfaces (7) form a forced conveying system (6) that conveys the free-flowing goods past the liquid output (5) in a direction in parallel with the rotary shaft (3).

4. Humidifying device according to any of claims 1 to 3, **characterised in that** the liquid output (5) comprises a slotted nozzle (15).

5. Humidifying device according to claim 4, **characterised in that** the slotted nozzle is formed between two rotor parts (16) and (17), the spacing between which is adjustable in parallel with the rotary shaft (3).

6. Humidifying device according to any of claims 1 to 5, **characterised in that** a radial spacing (18) is provided between a radially outward end (19) of the surface (7) and the casing (4), which radial spacing corresponds to a maximum of 5%, in particular a maximum of 2%, of an internal diameter of the casing.

7. Humidifying device according to any of claims 1 to 6, **characterised in that** the rotor (2) comprises at least one shear beam (20) on the side of the liquid output (5) that faces away from the forced conveying system (6).

8. Humidifying device according to claim 7, **characterised in that** a plurality of shear beams (20) are provided so as to be distributed in the axial direction and are offset relative to one another in the peripheral direction.

9. Humidifying device according to any of claims 1 to 8, **characterised in that** the feed (8) for free-flowing goods comprises a transporting device (21), in particular a beater metal sheet arrangement or a screw conveyor.

## Revendications

1. Dispositif de mouillage (1) destiné au mouillage de produits pouvant s'écouler, notamment de la farine, avec un rotor (2), qui présente un axe de rotation (3) et est entouré au moins en partie d'une enveloppe (4), avec une amenée de produits pouvant s'écouler dans l'enveloppe et une évacuation de fluide (5), qui évacue le fluide du rotor radialement vers l'extérieur, dans lequel le rotor présente plusieurs surfaces (7) faisant saillie de la périphérie du rotor (2), qui forment un angle aigu avec une direction périphérique du rotor, desquelles chacune est agencée au niveau d'un support de surface (9), dans lequel respectivement un espace (10) qui présente un rétrécissement (11) vers l'évacuation de fluide (5) est prévu entre des supports de surface adjacents (9), dans lequel le rétrécissement (11) est formé par une surface (7) et une extrémité (13) d'un support de surface adjacent (9), et chaque support de surface (9) est relié à son extrémité (13) par le biais d'une section de paroi (14), **caractérisé en ce que** les surfaces (7) et l'extrémité respectivement adjacente (13) d'un support de surface adjacent (9) et/ou de la section de paroi adjacente (14) d'un support de surface adjacent (9) se chevauchent l'une l'autre dans la direction périphérique.

2. Dispositif de mouillage selon la revendication 1, **caractérisé en ce qu'**un espace de détente (12) se raccorde au rétrécissement.

3. Dispositif de mouillage selon l'une quelconque des revendications 1 ou 2, **caractérisé en ce que** les surfaces (7) forment un dispositif de transport forcé (6), qui transporte les produits pouvant s'écouler devant l'évacuation de fluide (5) dans une direction parallèle à l'axe de rotation (3).

4. Dispositif de mouillage selon l'une quelconque des revendications 1 à 3, **caractérisé en ce que** l'évacuation de fluide (5) présente une buse à fente (15).

5. Dispositif de mouillage selon la revendication 4, **caractérisé en ce que** la buse à fente est réalisée entre deux parties de rotor (16) et (17), dont la distance est réglable parallèlement à l'axe de rotation (3).

6. Dispositif de mouillage selon l'une quelconque des revendications 1 à 5, **caractérisé en ce qu'**une distance radiale (18), qui correspond au maximum à 5 %, notamment au maximum à 2 % du diamètre intérieur de l'enveloppe, est prévue entre une extrémité radialement extérieure (19) de la surface (7) et l'enveloppe (4).

7. Dispositif de mouillage selon l'une quelconque des revendications 1 à 6, **caractérisé en ce que** le rotor (2) présente au moins une barre de cisaillement (20) sur le côté de l'évacuation de liquide (5) opposé au dispositif de transport forcé (6).

8. Dispositif de mouillage selon la revendication 7, **caractérisé en ce que** plusieurs barres de cisaillement (20), qui sont décalées l'une par rapport à l'autre dans la direction périphérique, sont prévues distribuées dans la direction axiale.

9. Dispositif de mouillage selon la revendication 1 à 8, **caractérisé en ce que** l'amenée de produits pouvant s'écouler (8) présente un dispositif de transport (21), en particulier un ensemble tôle de battoir ou une vis transporteuse.
